# EUROPÄISCHE PATENTSCHRIFT

(11) **EP 3 185 651 B1**
(45) Veröffentlichungstag und Bekanntmachung des Hinweises auf die Patenterteilung: **25.03.2020**
(21) Anmeldenummer: 16205496.9
(22) Anmeldetag: 20.12.2016
(51) Int. Cl.: H05B 33/08

(54) **VERFAHREN ZUR BELEUCHTUNGSREGELUNG UND SYSTEM**
METHODS FOR LIGHTING CONTROL AND SYSTEM
PROCÉDÉ DE RÉGLAGE D'ÉCLAIRAGE ET SYSTÈME

(30) Priorität: 22.12.2015 DE 102015122630
(43) Veröffentlichungstag der Anmeldung: 28.06.2017
(73) Patentinhaber: STEINEL GmbH, 33442 Herzebrock (DE)
(72) Erfinder: STEINEL, Ingo H., 33442 Herzebrock-Clarholz (DE); EISELE, Thomas, 52159 Rpetgen-Rott (DE)
(74) Vertreter: Müller Hoffmann & Partner

(56) Entgegenhaltungen:
- EP-A1- 1 657 614
- WO-A1-01/37616
- WO-A1-2014/057368
- WO-A1-2014/115048
- WO-A2-2012/004696
- US-A- 4 347 461
- US-A- 4 701 669
- US-A1- 2014 175 985

## Beschreibung

Die vorliegende Erfindung betrifft ein Verfahren zur Beleuchtungsregelung nach dem Oberbegriff des Hauptanspruchs. Ferner betrifft die vorliegende Erfindung ein System zur Beleuchtungsregelung, welches insbesondere auch zur Durchführung des gattungsgemäßen Verfahrens geeignet ist.

Die US 5 347 461 A offenbart eine Lampe mit einem Sensor, der die Reflexion des von der Lampe ausgestrahlten Lichts von einer Oberfläche misst. Zugleich wird der Reflexionsgrad der Oberfläche gemessen. Basierend auf diesen Messungen wird der komplette Lichteinfall bestimmt, der sich aus dem Lampenlicht und Licht weiterer Lichtquellen zusammensetzt. Dieser komplette Lichteinfall wird durch Einstellen der Lichtstärke der Lampe reguliert.

Die WO 2014/115048 A1 offenbart eine Beleuchtungsvorrichtung mit einer ersten und einer zweiten dimmbaren Lichtquelle. Die Dimmung der beiden Lichtquellen wird derart verstellt, dass ein Verhältnis der Dimmung der zweiten Lichtquelle zur Dimmung der ersten Lichtquelle mit zunehmendem absoluten Lichtfluss zunimmt.

Aus dem Stand der Technik sind des Weiteren Verfahren zur Beleuchtungsregelung nach dem Oberbegriff des Hauptanspruchs allgemein bekannt, insbesondere im Zusammenhang mit der Beleuchtungsregelung für Büros oder andere Arbeitsräume, bei welchen typischerweise an einem Deckenbereich des Innenraums vorgesehene elektrische Innenraum-Beleuchtungsmittel auf einen Beleuchtungsbereich, etwa einen Schreibtisch oder dgl. Arbeitsbereich, gerichtet sind. Sensormittel, etwa in Form gängiger Lichtstärkesensoren, erfassen eine Beleuchtungsstärke im Beleuchtungsbereich und bewirken dann das Regeln einer Lichtleistung der Innenraum-Beleuchtungsmittel auf einen geeigneten, z.B. konstanten und vorgegebenen, Beleuchtungssollwert, in Abhängigkeit von einem Ausgangssignal der etwa einen Fototransistor oder vergleichbare lichtempfindliche Elemente aufweisenden Sensormittel.

Derartige Systeme und Verfahren zur Beleuchtungsregelung in einem Innenraum sind in zahlreichen Varianten und Ausgestaltungen bekannt, wobei nicht nur Art, Anzahl und Anordnung der Innenraum-Beleuchtungsmittel in nahezu beliebigen Varianten existiert, vielmehr sind gleichermaßen die Sensormittel zum Erfassen einer Beleuchtungsstärke im Beleuchtungsbereich in diversen Varianten bekannt, sowohl als zur Decken- oder Wandmontage vorgesehene und mit den Beleuchtungsmitteln verbundene oder getrennt von diesen ausgestaltete Einheiten, als auch etwa in Form von Sensoren, welche als Helligkeitsmesser unmittelbar auf oder im Beleuchtungsbereich platziert sind, was jedoch nicht zuletzt aufgrund eines erhöhten Verkabelungs-, Anbindungs- und Konfigurationsaufwands in der Praxis weniger gebräuchlich ist.

Sämtliche als zum oberbegrifflichen Stand der Technik zählenden Technologien sorgen bestimmungsgemäß dafür, dass der Beleuchtungsbereich durch Regelung der Lichtleistung der Innenraum-Beleuchtungsmittel in etwa auf einem dem Beleuchtungssollwert entsprechenden konstanten Lichtpegel gehalten wird, selbst wenn sich Umgebungsbedingungen, bezogen auf den Beleuchtungsbereich, ändern: So würde etwa durch die bekannte Regelung der Lichtleistung dann, wenn Tageslicht oder Sonneneinfall in den Innenraum für zusätzliche Beleuchtung im Beleuchtungsbereich sorgt, die Lichtleistung der Innenraum-Beleuchtungsmittel entsprechend abgesenkt werden, so dass eine von den Sensormitteln erfasste Beleuchtungsstärke im Wesentlichen konstant gehalten wird.

In der Praxis, insbesondere im Zusammenhang mit großflächigen und/oder im Hinblick auf herrschende Beleuchtungsverhältnisse sensiblen Beleuchtungsbereichen wie etwa Büro-, Operations- oder Montagetischen ist die bekannte Vorgehensweise bei der Beleuchtungsregelegung jedoch nicht immer befriedigend, insbesondere sind Betriebs- bzw. Beleuchtungssituationen denkbar, bei welchen die beschriebene Regelung zu unerwünschten oder gar nachteiligen Effekten führt.

Dies ist etwa der Fall, wenn, am Beispiel einer Schreibtischoberfläche als Beleuchtungsbereich, welcher in ansonsten bekannter Weise in einem Büroumfeld als Innenraum von typischerweise deckenseitig vorgesehenen Innenraum-Beleuchtungsmitteln beleuchtet wird, eine dort arbeitende Person zusätzlich eine Schreibtischleuchte aktiviert, mit dem Zweck, aktuell eine lokale Beleuchtungsstärke zu erhöhen.

Im Rahmen einer vorbeschriebenen, gattungsgemäßen Beleuchtungsregelung würden dann jedoch die Sensormittel als Reaktion auf das zusätzlich erfasste Licht der Schreibtischleuchte fälschlich von der Notwendigkeit ausgehen, die Lichtmenge im Beleuchtungsbereich konstant zu halten, es würde also dann durch Absenken der Lichtleistung der Innenraum-Beleuchtungsmittel die eigentlich erwünschte zusätzliche Lichtmenge wieder (nachteilig) ausgeregelt. Zwar könnte eine Bedienperson, zusammen mit dem beschriebenen situativen und üblicherweise manuellen Aktivieren der (zusätzlichen) Schreibtischleuchte gleichermaßen das Regeln der Lichtleistung der Deckenleuchte (als Innenraum-Beleuchtungsmittel) deaktivieren, derartige denkbare Lösungen sind jedoch komplex in der Umsetzung und mühsam und unpraktisch in der Bedienung.

Ein weiteres Problem bei als aus dem Stand der Technik bekannt und gattungsbildend vorausgesetzten Verfahren zur Beleuchtungsregelung in einem Innenraum besteht insbesondere dann, wenn die Sensormittel - wie üblich - von einem Decken- oder Wandbereich auf den Beleuchtungsbereich gerichtet sind und üblicherweise auf diesen Bereich mit dem Zweck fokussiert sind, parasitäre Lichteffekte möglichst unberücksichtigt zu lassen.

Derartige Sensormittel, welche zudem häufig zusammen mit Innenraum-Beleuchtungsmitteln zur Decken- oder Wandmontage in geeigneten Gehäuse- oder Trägereinheiten integriert sind, müssen zur zuverlässigen Beleuchtungsdetektion auf die zu erfassende Oberfläche des Beleuchtungsbereichs eingerichtet bzw. kalibriert sein, da die Reflexionseigenschaften einer solchen Oberfläche stark beeinflussen, was von derartigen Sensoren von der eintreffenden Beleuchtung tatsächlich erfasst bzw. gemessen werden kann. Üblicherweise erfolgt eine solche Einrichtung bzw. Kalibration mit gängigen Reflexionswerten, wie sie etwa, wiederum am Beispiel eines Schreibtisches, einer leeren Schreibtischoberfläche aus Holz oder Kunststoff entsprechen.

Erfolgt jedoch, als übliche Situation, vorübergehend und im Rahmen alltäglicher Tätigkeiten bzw. Arbeitsabläufe an oder im Beleuchtungsbereich, eine Veränderung dieser Oberfläche im Hinblick auf die voreingerichteten bzw. eingestellten Reflexionseigenschaften, etwa dadurch, dass Objekte mit anderen Reflexionseigenschaften auf der Oberfläche platziert werden, entsteht eine Verfälschung der Beleuchtungsmessung der (auf die Oberfläche gerichteten) Sensormittel.

Etwa im Fall von stark lichtabsorbierenden (und damit schlecht reflektierenden) Objekten auf einer Tischoberfläche könnte dies - für einen Benutzer ungewollt bzw. unbeabsichtigt - eine Regelreaktion der Regelmittel auslösen, welche die Lichtleistung der Innenraum-Beleuchtungsmittel ungewollt erhöht und mithin eine Lichtstärke erzeugt, welche unangemessen hoch für die betroffene Person ist. Gleiches gilt für einen umgekehrten Fall einer stark reflektierenden Beeinflussung des Beleuchtungsbereichs durch dort eingebrachte oder platzierte Objekte, hier mit der (möglicherweise ungewollten) Reaktion einer Absenkung der einfallenden Lichtstärke. Auch können etwa Farben oder andere Objekt- oder Oberflächeneigenschaften in typischerweise nur schwer und auf komplexe Weise zu beherrschender Beweise zu diesen nachteiligen Effekten führen.

Aufgabe der vorliegenden Erfindung ist es daher, ein Verfahren zur Beleuchtungsregelung sowie ein System zur Beleuchtungsregelung für einen Innenraum, insbesondere einen für Büro- oder Produktionszwecke in einem industriellen oder geschäftlichen Kontext zu nutzenden Innenraum, zu schaffen, welche Einflüsse, insbesondere situative Einflüsse, im Beleuchtungsbereich insoweit berücksichtigt, als nicht stets eine Regelreaktion durch Anpassung der Lichtleistung der Innenraum-Beleuchtungsmittel erfolgt, sondern dies insbesondere nur dann, wenn etwa auch die Licht- bzw. Beleuchtungverhältnisse in einem Umfeld bzw. Umgebungsbereich des Beleuchtungsbereichs eine solche Anpassung rechtfertigen. Dagegen sollen insbesondere punktuelle, eine Erfassungsreaktion von Sensormitteln beeinflussende Effekte im Beleuchtungsbereich zu keiner oder lediglich zu einer verminderten Regelreaktion bezogen auf die Lichtleistung der Innenraum-Beleuchtungsmittel führen.

Die Aufgabe wird durch das Verfahren zur Beleuchtungsregelung nach dem Oberbegriff des Hauptanspruchs gelöst. Vorteilhafte Weiterbildungen der Erfindung sind in den Unteransprüchen beschrieben. Unabhängiger Schutz im Rahmen der Erfindung wird zudem beansprucht für ein System zur Beleuchtungsregelung, welches zwar bevorzugt auch zur Durchführung des erfindungsgemäßen Verfahrens geeignet und vorgesehen ist, jedoch auch unabhängig von diesem als zur Erfindung gehörig gilt. Weiterbildende apparative bzw. Systemmerkmale des erfindungsgemäßen Verfahrens, insbesondere durch die Unteransprüche, gelten als gleichermaßen erfindungsgemäß die Systemerfindung weiterbildend und insoweit als zur Erfindung gehörig offenbart.

In erfindungsgemäß vorteilhafter Weise sind zunächst neben den auf den Beleuchtungsbereich gerichteten (und bevorzugt und weiterbildend im Rahmen der Erfindung nur auf den Beleuchtungsbereich gerichteten) und damit auf diesen fokussierten ersten Sensormittel zweite Sensormittel vorgesehen, welche zum Erfassen einer zweiten Beleuchtungsstärke in einem erweiterten Beleuchtungserfassungsbereich im Innenraum ausgebildet und vorgesehen sind. Erfindungsgemäß ist dieser erweiterte Beleuchtungserfassungsbereich so definiert, dass er zumindest abschnittweise außerhalb des Beleuchtungsbereichs, sowie zusätzlich zumindest abschnittsweise außerhalb eines Erfassungsbereichs der ersten Sensormittel liegt.

Dies schließt zwar nicht aus, dass der erweiterte Beleuchtungserfassungsbereich der zweiten Sensormittel auch den Beleuchtungsbereich (mit) abdeckt und/oder mit dem Erfassungsbereich der ersten Sensormittel ganz oder teilweise überlappt, wesentlich ist jedoch, dass der erweitere Beleuchtungserfassungsbereich mit der dort herrschenden zweiten Beleuchtungsstärke zur Erfassung durch die zweiten Sensormittel eine Messung von Licht- bzw. Beleuchtungsverhältnissen außerhalb des Beleuchtungsbereich gestattet. Diese zweite Beleuchtungsstärke, welche damit in Abgrenzung von der ausschließlich im Beleuchtungsbereich geltenden ersten Beleuchtungsstärke insbesondere auch Licht- bzw. Beleuchtungseinflüsse im den Beleuchtungsbereich umgebenden Innenraum erfasst (wobei weiterbildungsgemäß durchaus auch Fensterbereiche oder andere Öffnungen zu einem Umfeld außerhalb des Innenraums in der zweiten Beleuchtungsstärke berücksichtigt sein können), dient dann dazu, erfindungsgemäß Effekte, welche sich ausschließlich im Beleuchtungsbereich abspielen, geeignet zu bewerten und auch diese erfindungsgemäß zu korrigieren.

Konkret ist es nämlich im Rahmen der Erfindung vorgesehen, Änderungen einer von den ersten Sensormitteln erfassten ersten Beleuchtungsstärke (also im Beleuchtungsbereich) in Beziehung zu Änderungen der durch die zweiten Sensormittel erfassten zweiten Beleuchtungsstärke (also berücksichtigend auch Licht bzw. Beleuchtung außerhalb des Beleuchtungsbereichs) in Beziehung zu setzen, wobei die Änderungen dann jeweils im selben Zeitabschnitt stattfinden. Sollte dann im Rahmen des erfindungsgemäßen Verfahrens festgestellt werden, dass etwa, beim oben beschriebenen Kontextbeispiel einer punktuellen gewollten Aktivierung einer Schreibtischleuchte im Beleuchtungsbereich eines Schreibtisches, die diesbezügliche Änderung der ersten Beleuchtungsstärke überproportional stärker sein als die im selben Zeitabschnitt detektierte Änderung der zweiten Beleuchtungsstärke, würde die Erfindung durch das erfindungsgemäße Nachstellen des Beleuchtungssollwerts für das Regeln der Lichtleistung der Innenraum-Beleuchtungsmittel die Möglichkeit dafür schaffen, dass nicht, wie bislang aus dem Stand der Technik zu erwarten, durch Abregeln bzw. Absenken der Lichtleistung der Deckenleuchte als Innenraum-Beleuchtungsmittel die eigentlich von der Bedienperson gewünschte Licht-Mehrleistung nivelliert wird, sondern vielmehr tatsächlich für den Zeitraum des (z.B. manuell vorgenommenen) Betriebs der Schreibtischleuchte bestehen bleibt. Eine vergleichbare Reaktion würde, im Unterschied zum vorbeschriebenen Stand der Technik, auch dann erfolgen, wenn etwa Objekte mit signifikant geänderten Reflexionseigenschaften in den Beleuchtungsbereich platziert werden. Dagegen würde jedoch etwa eine Änderung von Umgebungslichtverhältnissen, wie etwa eintretende Dämmerung (oder eine kurzfristige Verschattung von extern durch ein Fenster hineinfallenden Sonnenlichts durch Wolken) dazu führen, dass die ersten Sensormittel und die zweiten Sensormittel mit der erfassten ersten bzw. zweiten Beleuchtungsstärke im Zeitabschnitt (Zeitintervall) eine annähernd verhältnisgleiche Änderung der Beleuchtungsstärken erfassen, mit dem Ergebnis, dass analog zum vorbeschriebenen Stand der Technik und als Reaktion etwa auf die zunehmende Dämmerung, die Regelung der Lichtleistung der Innenraum-Beleuchtungsmittel zu einer Erhöhung führt.

Dieses erfindungsgemäße Prinzip, welches sich gleichermaßen im erfindungsgemäßen Verfahren, als auch im erfindungsgemäßen System, verkörpert, kann über eine Vielzahl von Weisen umgesetzt werden, wie in Form der erfindungsgemäßen Weiterbildungen dargelegt ist; diese sind jedoch nicht abschließend oder umfassend.

So eignet sich die vorliegende Erfindung insbesondere für Büro- oder (industrielle) Arbeitsumgebungen, wobei zusätzlich auch etwa andere Umgebungen mit differenziertem Beleuchtungsbedarf die Erfindung nutzen können, etwa Operationstische oder dgl. Beleuchtungsbereiche im Medizinbereich. Insoweit ist im Rahmen der Erfindung eine Verwendung für derartige Anwendungs- bzw. Einsatzumgebungen bevorzugt, jedoch nicht abschließend.

Auch ist es im Rahmen bevorzugter Ausführungsbeispiele der Erfindung bevorzugt, die Innenraum-Beleuchtungsmittel am oder im Deckenbereich des Innenraums vorzusehen, ergänzend oder alternativ auch an oder in Wandbereichen des Innenraums, wobei weiter bevorzugt dann ein geeignetes Gehäuse oder eine geeignete Trägereinheit für die Innenraum-Beleuchtungsmittel zusätzlich mechanisch die ersten und/oder die zweiten Sensormittel aufnimmt bzw. trägt. Auf diese Weise entsteht eine kompakte und potenziell modulare Struktur, welche, möglicherweise auch schon geeignet vorkonfiguriert, einfach und mit geringem Montageaufwand in Innenräumen konfiguriert bzw. an Decken- oder Wandbereichen eines Innenraums montiert werden kann. Natürlich ist es gleichermaßen im Rahmen der Erfindung möglich, diese Komponenten räumlich zu trennen, wobei es, insbesondere mit dem Zweck einer effektiven Realisierung und Einrichtung des Beleuchtungsbereichs sowie des erweiterten Beleuchtungsbereichs möglich ist, die zugehörigen ersten bzw. zweiten Sensormittel geeignet einzeln und isoliert zu platzieren, wobei dann wiederum, entsprechend einer jeweiligen Ausgestaltung und notwendigen Anforderungen, diese Sensormittel als Einzelsensoren, alternativ auch als (jeweilige) Mehrzahl von Sensoren ausgestaltet sein können. Deren Anbindung kann dann einerseits drahtgebunden, alternativ auch mittels üblicher drahtloser (Daten-)Übertragungsverfahren und Protokolle mit den für das Regeln der Lichtleistung implementierten Regelmitteln kommunizieren. Auch ist es weiterbildungsgemäß denkbar, mit Hilfe von ansonsten bekannten Sensormitteln, die jeweils variable bzw. (mechanisch oder elektronisch) einstellbare Erfassungsbereiche aufweisen, den erfindungsgemäßen Beleuchtungsbereich und/oder den erfindungsgemäßen erweiterten Beleuchtungserfassungsbereich mittels eines Teach-Modus oder dgl. Lern- bzw. Konfigurationsbetrieb einzurichten, im Rahmen dessen geeignete Markierungen oder dgl. Signale den Sensormitteln Grenzen der jeweiligen, zu erfassenden Bereiche anzeigen und diese dann, typischerweise elektronisch, gespeichert werden. Etwa zu diesem Zweck, jedoch auch mit der Möglichkeit eines weitergehenden manuellen Benutzereingriffs, ist es sinnvoll, dem erfindungsgemäßen Verfahren bzw. dem erfindungsgemäßen System bevorzugt drahtlos arbeitende Fernbedienungseinheiten zur Handhabung und Bedienung durch eine Person zuzuordnen.

Über eine beschriebene elektronische Einstellung bzw. Konfiguration eines Sensorerfassungswinkels hinaus, ist es ergänzend oder alternativ auch im Rahmen von Ausgestaltungen der Erfindung möglich, den ersten und/oder den zweiten Sensormitteln geeignete Blenden oder dgl. optische Mittel zuzuordnen, welche zusätzlich weiterbildend und bevorzugt geeignet lösbar und/oder veränderbar an oder auf den ersten bzw. zweiten Sensormitteln befestigt werden können.

Im Ergebnis gestattet es die vorliegende Erfindung in überraschend einfacher und eleganter Weise, das Betriebsverhalten eines Verfahrens zur Beleuchtungsregelung bzw. eines Systems zur Beleuchtungsregelung insbesondere für solche Situationen zu verbessern, bei welchen typische, lokal auf den Beleuchtungsbereich begrenzte (geplante oder unbeabsichtigte) Einflüsse nicht automatisch zu einer potenziell unerwünschten Nivellierung mittels einer Regelreaktion der Innenraum-Beleuchtungsmittel führen; vielmehr wird durch die vorliegende Erfindung zunächst die Möglichkeit einer differenzierten Regelreaktion erkannt, welche dann, lediglich mit Hilfe der zusätzlichen zweiten Sensormittel, in technisch eleganter und einfacher Weise umgesetzt wird.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:

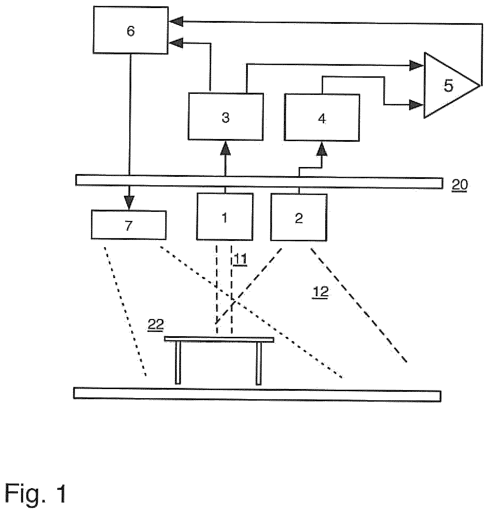

- Fig. 1: ein Blockschaltbild des erfindungsgemäßen Systems zur Beleuchtungsregelung gemäß einem ersten bevorzugten Ausführungsbeispiel der Erfindung.

Das Blockschaltbild der Fig. 1 verdeutlicht in schematischer Weise ein erfindungsgemäßes System zur Beleuchtungsregelung, welches gleichermaßen zur Realisierung des erfindungsgemäßen Verfahrens zur Beleuchtungsregelung vorgesehen und ausgestaltet ist.

In einem Deckenbereich 20 eines Raums ist eine Leuchte 7 als Innenraumbeleuchtungsmittel vorgesehen, welche mittels einer vorgeschalteten Regelelektronik in ansonsten bekannter Weise auf einen Regelsollwert geregelt wird. Dieser Regelsollwert gibt typischerweise eine gewünschte Beleuchtungsstärke im Innenraum vor, wobei im beschriebenen Ausführungsbeispiel als vorgesehener Beleuchtungsbereich 22 der Beleuchtungsmittel ein Tisch, etwa in Form eines Schreibtisches, vorgesehen ist.

Wie durch das Bezugszeichen 1 und das schematische Blockelement der Fig. 1 angedeutet ist, ist auf dieses den Beleuchtungsbereich beschreibende bzw. im Beleuchtungsbereich gelegene Objekt 22 ein erster Lichtsensor 1 gerichtet, welcher, dargestellt durch einen Sensorerfassungsbereich 11, schmal und fokussiert auf den Tisch (Beleuchtungsbereich) 22 gerichtet ist. Die Sensoreinheit 1 samt nachgeschalteter Auswertelektronik 3 erzeugt entsprechend der (fokussiert) erfassten Lichtstärke im Bereich 11 ein proportionales Sensorsignal, welches der Regeleinheit 6 vorgeschalteten Vergleichsmitteln 5 anliegt.

Wie auch die Regeleinheit 6 sind die Vergleichsmittel 5 üblicherweise durch eine geeignet programmierte Mikroprozessor- bzw. Mikrocontrollereinheit einer der Leuchteneinheit 7 zugeordneten Steuerelektronik implementiert.

Wie das schematische Diagramm der Fig. 1 zusätzlich illustriert, ist, typischerweise und bevorzugt benachbart dem ersten Sensor 1 und weiter bevorzugt mit diesem in eine gemeinsame Träger- bzw. Gehäuseeinheit (nicht gezeigt) integriert, eine zweite Sensoreinheit 2 vorgesehen, welche einen gegenüber dem Erfassungsbereich 11 erweiterten Beleuchtungserfassungsbereich 12 aufweist, insbesondere einen, wie in der Fig. 1 illustriert, erweiterten Erfassungswinkel in zumindest einer Vertikalebene (bezogen auf die Decke 20). Dies führt dazu, dass der erweiterte Erfassungsbereich 12 der zweiten Sensoreinheit 2 einerseits das Objekt 22 im Beleuchtungsbereich erfasst, darüber hinaus jedoch auch auf einen davon abweichenden bzw. darüber hinaus reichenden, extern des den Beleuchtungsbereich 22 definierenden Tisches gerichtet ist. Damit erstreckt sich zwar der Beleuchtungs-Erfassungsbereich 12 der Sensoreinheit 2 partiell auch in den Beleuchtungsbereich 22, erfasst jedoch insbesondere auch Licht außerhalb dieses Bereichs. Gleichermaßen überlappt der (gegenüber 11 erweiterte) Erfassungsbereich 12 mit dem (fokussierteren, schmaleren) Erfassungsbereich 11, ist jedoch auch außerhalb des Erfassungsbereichs 11 wirksam.

Analog zur Beschaltung der ersten Sensoreinheit 1 ist der zweiten Sensoreinheit 2 eine Auswerteeinheit 4 nachgeschaltet, deren Ausgangssignal einem zweiten Eingang der Vergleichsmittel 5 anliegt.

Durch eine Rückkopplungsschleife zwischen dem der ersten Sensoreinheit 1 zugeordneten Ausgang des Vergleichers 5 und der Regeleinheit 6 ist eine Regelfunktionalität ermöglicht, welche im Weiteren beschrieben wird, um den Betrieb der in Fig. 1 schematisch illustrierten Vorrichtung, damit das erfindungsgemäße Verfahren zur Beleuchtungsregelung in diesem Ausführungsbeispiel, zu erläutern.

Sobald etwa ein anfänglich einstellbarer bzw. vorbestimmbarer Schwellwert überschritten wird, werden die Beleuchtungsmittel 7 aktiviert. Dies geschieht beispielsweise durch Funktion der ersten Lichtsensoreinheit 1, die durch ihren schmalen fokussierten Erfassungsbereich 11, unmittelbar gerichtet auf den Beleuchtungsbereich 22, dort aktuelle Lichtverhältnisse feststellt. Eine Aktivierung der Beleuchtungsmittel kann insbesondere auch durch einen Schalter (Lichtschalter, Fernbedienung) oder durch andere externe Stimuli erfolgen.

Im weiteren Beleuchtungsbetrieb erfolgt eine kontinuierliche Erfassung der Beleuchtungsstärke als erste Beleuchtungsstärke im Beleuchtungsbereich 22 durch den auf den Beleuchtungsbereich gerichteten ersten (fokussierten) Lichtsensor, und in Abhängigkeit etwa von weiteren externen Lichtquellen, wie durch ein (nicht gezeigtes) Fenster in den Innenraum eintretendes Licht und dessen Änderung, erfolgt eine Regelung der Lichtleistung der Beleuchtungsmittel 7 auf den zuerst bzw. initial eingestellten Beleuchtungssollwert, abhängig von einem Ausgangssignal der Einheiten 1, 3.

Zusätzlich erfolgt mittels der zweiten Sensoreinheit 2 eine (bevorzugt kontinuierliche, alternativ etwa geeignet zeitlich punktuelle und/oder periodische) Erfassung einer zweiten Beleuchtungsstärke, welche, definiert durch den Erfassungsbereich 12, auch Bereiche außerhalb des Beleuchtungsbereichs 11 erfassen kann. So kann beispielsweise die zweite Sensoreinheit 2 auch auf einen Bodenbereich neben dem Tisch 22, ergänzend oder alternativ auch das (nicht gezeigte) Fenster einschließen.

Im Rahmen der vorliegenden Erfindung ist dabei die in Fig. 1 exemplarisch dargestellte Regelfunktionalität so eingerichtet, dass durch die Vergleichsmittel sowie die nachfolgend vorgesehenen Regelmittel ein Verhältnis der durch die ersten und zweiten Sensoreinheiten (bzw. der nachgeschalteten Auswerte- bzw. Verstärkereinheiten) erzeugten Signale gebildet und kontinuierlich überwacht wird und dabei auch Zeitaspekte berücksichtigt werden. Insbesondere werden dadurch nämlich, wie von der Erfindung vorgesehen, Änderungen der von der ersten Sensoreinheit 1 erfassten Beleuchtungsstärke im Beleuchtungsbereich 22 in Beziehung zu einer durch die zweite Sensoreinheit 2 im Bereich 12 erfassten Beleuchtungsstärke gesetzt werden, und es werden insbesondere die jeweiligen Änderungen im Zeitablauf beobachtet.

Sollte sich daher ergeben, dass etwa, durch eine manuelle Aktivierung einer (nicht gezeigten) Schreibtischleuchte auf dem Tisch 22, die dadurch bewirkte Änderung der Beleuchtungsstärke im Beleuchtungsbereich 22 überproportional stärker wird als die im selben Zeitabschnitt detektierte Änderung der Beleuchtungsstärke im erweiterten Bereich 12, würde die Erfindung dafür sorgen, dass der Beleuchtungssollwert für das Regeln der Lichtleistung verändert wird, mit dem Ergebnis, dass als Reaktion auf die festgestellte Veränderung außerhalb eines (üblicherweise vorbestimmten) Verhältnisschwellwerts, ein Umstand vorliegt, welcher keine oder eine lediglich unterproportionale Anpassung der durch die Deckenleuchte 7 abgegebenen Lichtstärke erfordert.

Damit sorgt die Technologie dafür, dass etwa die von dem Bediener auf dem Schreibtisch 22 aktivierte Schreibtischleuchte tatsächlich dort für zusätzliche Beleuchtung sorgt und diese nicht etwa - unerwünscht - durch Ausregeln (und damit proportionales Dimmen der Deckenleuchte 7) wiederum kompensiert wird.

Dagegen würde etwa das System bei einer Änderung von Umgebungslichtverhältnissen wie etwa von durch das Fenster in den Innenraum hereintretenden externen Beleuchtungseffekten, feststellen, dass ein Verhältnis der durch die Sensoreinheiten 1 bzw. 2 erfassten Beleuchtungsstärke, proportional bleibt bzw. nicht über einen geeignet gesetzten bzw. zu setzenden Verhältnisschwellwert hinausgeht, so dass zur Kompensation dann eine geeignete Anpassung der Innenraumbeleuchtung 7 erfolgen kann - dadurch, dass nämlich der der Regelung zugrundeliegende Sollwert unverändert bleibt und entsprechend die Regelreaktion bewirkt.

## Patentansprüche

1. Verfahren zur Beleuchtungsregelung in einem einen Deckenbereich (20) sowie einen dem Deckenbereich (20) gegenüberliegenden, zu beleuchtenden Beleuchtungsbereich (22) aufweisenden Innenraum, mit den Schritten:
Aktivieren von den Beleuchtungsbereich (22) beleuchtenden elektrischen Innenraum-Beleuchtungsmitteln (7),
Erfassen einer ersten Beleuchtungsstärke im Beleuchtungsbereich (22) durch auf den Beleuchtungsbereich gerichtete und/oder zum Erfassen der ersten Beleuchtungsstärke im Beleuchtungsbereich (22) eingerichtete erste Sensormittel (1),
Regeln einer Lichtleistung der Innenraum-Beleuchtungsmittel (7) auf einen Beleuchtungssollwert, welcher ein Regelsollwert der Beleuchtungsregelung ist, als Reaktion auf ein Ausgangssignal der ersten Sensormittel (1),
durch separat von den ersten Sensormitteln (1) vorgesehene zweite Sensormittel (2) zusätzliches Erfassen einer zweiten Beleuchtungsstärke in einem erweiterten Beleuchtungserfassungsbereich (12) im Innenraum, der zumindest abschnittsweise außerhalb des Beleuchtungsbereichs (22) sowie eines Erfassungsbereichs (11) der ersten Sensormittel (1) liegt,
**gekennzeichnet durch**
Anpassen des Beleuchtungssollwerts derart, dass keine Veränderung der Lichtleistung auftritt, wenn eine erfasste Änderung der ersten Beleuchtungsstärke in einem Zeitabschnitt als überproportional stärker zu einer erfassten Änderung der zweiten Beleuchtungsstärke in dem Zeitabschnitt detektiert wird, wobei
das Anpassen des Beleuchtungssollwerts ein Absenken des Beleuchtungssollwerts ist, wenn die erfasste Änderung der ersten Beleuchtungsstärke eine Abnahme der ersten Beleuchtungsstärke ist, und
das Anpassen des Beleuchtungssollwertes ein Anheben des Beleuchtungssollwerts ist, wenn die erfasste Änderung der ersten Beleuchtungsstärke ein Anstieg der ersten Beleuchtungsstärke ist.

2. Verfahren nach Anspruch 1, wobei
das Erfassen der ersten Beleuchtungsstärke durch die am Deckenbereich (20) vorgesehenen ersten Sensormittel (1) erfolgt und/oder das Erfassen der zweiten Beleuchtungsstärke durch die am Deckenbereich (20) vorgesehenen zweiten Sensormittel (2) erfolgt.

3. Verfahren nach einem der Ansprüche 1 oder 2, wobei
die zweiten Sensormittel (2) gegenüber den ersten Sensormitteln (1) eine unterschiedliche Sensorausrichtung im Innenraum und/oder einen vergrößerten Sensorerfassungswinkel, für sichtbares Licht, aufweisen.

4. Verfahren nach einem der Ansprüche 1 bis 3, wobei
der Beleuchtungsbereich (22) eine von einem Bodenbereich des Innenraums beabstandete Tischoberfläche oder ein Abschnitt einer solchen Tischoberfläche ist.

5. Verfahren nach einem der Ansprüche 1 bis 4, wobei
der Innenraum ein Fenster aufweist, und der erweiterte Beleuchtungserfassungsbereich (12) einen äußeren Lichteinfall durch das Fenster erfasst oder zumindest abschnittsweise einen Lichtdurchlassbereich des Fensters einschließt.

6. System zur Beleuchtungsregelung in einem einen Deckenbereich (11) sowie einen dem Deckenbereich gegenüberliegenden, zu beleuchtenden Beleuchtungsbereich (22) aufweisenden Innenraum, mit
Regelmitteln (6);
ersten und zweiten Sensormitteln (1, 2); und
elektrischen Innenraumbeleuchtungsmitteln (7), wobei
die Regelmittel (6) geeignet sind, eine Lichtleistung der Innenraumbeleuchtungsmittel (7) auf einen Beleuchtungssollwert, welcher ein Regelsollwert der Beleuchtungsregelung ist, als Reaktion auf ein Ausgangssignal der ersten Sensormittel (1) zu regeln;
die ersten Sensormitteln (1) geeignet sind, eine erste Beleuchtungsstärke in dem Beleuchtungsbereich (22) der Innenraum-Beleuchtungsmittel (7) zu erfassen, und die ersten Sensormittel (1) auf den Beleuchtungsbereich (22) gerichtet sind und/oder so eingerichtet sind, dass sie die erste Beleuchtungsstärke im Beleuchtungsbereich (22) erfassen,
die zweiten Sensormittel (2) separat von den ersten Sensormitteln (1) vorgesehenen und geeignet sind, eine zweite Beleuchtungsstärke in einem erweiterten Beleuchtungs-Erfassungsbereich (12) im Innenraum zumindest abschnittsweise außerhalb des Beleuchtungsbereichs (22) sowie zumindest abschnittsweise außerhalb eines Erfassungsbereichs (11) der ersten Sensormittel (1) zu erfassen,
**dadurch gekennzeichnet, dass**
die Regelmittel ausgebildet sind zum Ausführen der folgenden Schritte:
Anpassen des Beleuchtungssollwerts derart, dass keine Veränderung der Lichtleistung auftritt, wenn die Regelmittel (6) detektieren, dass eine erfasste Änderung der ersten Beleuchtungsstärke in einem Zeitabschnitt überproportional stärker als eine erfasste Änderung der zweiten Beleuchtungsstärke in dem Zeitabschnitt ist, wobei
das Anpassen des Beleuchtungssollwerts ein Absenken des Beleuchtungssollwerts ist, wenn die erfasste Änderung der ersten Beleuchtungsstärke eine Abnahme der ersten Beleuchtungsstärke ist, und
das Anpassen des Beleuchtungssollwertes ein Anheben des Beleuchtungssollwerts ist, wenn die erfasste Änderung der ersten Beleuchtungsstärke ein Anstieg der ersten Beleuchtungsstärke ist.

7. System nach Anspruch 6, wobei
die Innenraum-Beleuchtungsmittel (7) mit mindestens einem der ersten und der zweiten Sensormittel (1, 2) oder gemeinsam mit den ersten und den zweiten Sensormitteln (1, 2), angeordnet und/oder vorgesehen sind.

8. System nach Anspruch 7, wobei die Innenraum-Beleuchtungsmittel (7) mit mindestens einem der ersten und der zweiten Sensormittel (1, 2) oder gemeinsam mit den ersten und den zweiten Sensormitteln (1, 2) an oder in einer gemeinsamen Gehäuse- und/oder Trägereinheit am Deckenbereich (20) vorgesehen sind.

## Claims

1. A method for regulating illumination in an interior having a cover region (20) as well as an illumination region (22) to be illuminated, which illumination region is opposite the cover region (20), with the steps:
activating the electrical interior-illuminating means (7) illuminating the illumination region (22),
registering a first illumination value in the illumination region (22) by first sensor means (1) directed at the illumination region and/or set up to register the first illumination value in the illumination region (22),
regulating a light output of the interior-illuminating means (7) to an illumination set value which is a regulating set value of the illumination regulation, as a reaction to the output signal of the first sensor means (1),
additionally registering a second illumination value in an extended illumination-registering region (12) in the interior using second sensor means (2) provided separately from the first sensor means (1), which extended illumination-registering region lies at least partly outside the illumination region (22) as well as a registering region (11) of the first sensor means (1),
**characterised by**
adapting the illumination set value such that no change in light output occurs if a registered change in first illumination value in a period is detected as being disproportionately higher than a registered change in second illumination value in the period, wherein
the adaptation of the illumination set value is a reduction in the illumination set value if the registered change in first illumination value is a reduction in first illumination value, and
the adaptation of the illumination set value is an increase in illumination set value if the registered change in first illumination value is an increase in first illumination value.

2. The method according to claim 1, wherein
the first illumination value is registered by the first sensor means (1) provided on the cover region (20) and/or the second illumination value is registered by the second sensor means (2) provided on the cover region (20).

3. The method according to one of claims 1 to 2, wherein
the second sensor means (2) have a different sensor alignment in the interior and/or an enlarged sensor-registering angle for visible light, compared with the first sensor means (1).

4. The method according to one of claims 1 to 3, wherein
the illumination region (22) is a table surface remote from a floor region of the interior, or a section of such a table surface.

5. The method according to one of claims 1 to 4, wherein
the interior has a window and the extended illumination-registering region (12) registers external incidence of light through the window or at least partly includes a light-permeation region of the window.

6. A system for regulating illumination in an interior having a cover region (11) as well as an illumination region (22) to be illuminated, which illumination region is opposite the cover region, with:
regulating means (6);
first and second sensor means (1, 2);
and electrical interior-illuminating means (7), wherein
the regulating means (6) are suitable for regulating a light output of the interior-illuminating means (7) to an illumination set value which is a regulating set value of the illumination regulation, as a reaction to the output signal of the first sensor means (1);
the first sensor means (1) are suitable for registering a first illumination value in the illumination region (22) of the interior-illuminating means (7), and the first sensor means (1) are directed at the illumination region (22) and/or are set up such that they register the first illumination in the illumination region (22),
the second sensor means (2) are provided separate from the first sensor means (1) and are suitable for registering a second illumination value in an extended illumination-registering region (12) in the interior at least partly outside the illumination region (22) as well as at least partly outside a registering region (11) of the first sensor means (1),
**characterised in that**
the regulating means are designed to carry out the following steps:
adapting the illumination set value such that no change in light output occurs if the regulating means (6) detect that a registered change in first illumination value in a period is disproportionately greater than a registered change in second illumination value in the period, wherein
the adaptation of the illumination set value is a reduction in the illumination set value if the registered change in first illumination value is a reduction in first illumination value, and
the adaptation of the illumination set value is an increase in illumination set value if the registered change in first illumination value is an increase in first illumination value.

7. The system according to claim 6, wherein
the interior-illuminating means (7) are arranged and/or provided with at least one of the first and second sensor means (1, 2) or together with the first and second sensor means (1, 2).

8. The system according to claim 7, wherein the interior-illuminating means (7) are provided with at least one of the first and second sensor means (1, 2) or together with the first and second sensor means (1, 2) at or in a common housing and/or support unit on the cover region (20).

## Revendications

1. Procédé pour la régulation d'éclairage dans un espace intérieur comportant une zone de plafond (20) ainsi qu'une zone d'éclairage (22) à éclairer opposée à la zone de plafond (20), comprenant les étapes :
activer des moyens d'éclairage électriques d'espace intérieur (7) éclairant la zone d'éclairage (22),
détecter un premier éclairement dans la zone d'éclairage (22) par de premiers moyens capteurs (1) dirigés sur la zone d'éclairage et/ou installés pour détecter le premier éclairement dans la zone d'éclairage (22),
réguler une puissance lumineuse des moyens d'éclairage d'espace intérieur (7) à une valeur de consigne d'éclairage, qui est une valeur de consigne de régulation de la régulation d'éclairage, en réaction à un signal de sortie des premiers moyens capteurs (1),
détecter en supplément, par de deuxièmes moyens capteurs (2) prévus séparément des premiers moyens capteurs (1), un deuxième éclairement dans une zone de détection d'éclairage élargie (12) dans l'espace intérieur, qui est située au moins par sections en dehors de la zone d'éclairage (22) et d'une zone de détection (11) des premiers moyens capteurs (1),
**caractérisé par**
adapter la valeur de consigne d'éclairage de telle sorte qu'aucune modification de la puissance lumineuse n'apparaisse si une variation détectée du premier éclairement dans un laps de temps est détectée comme supérieure de manière disproportionnée à une variation détectée du deuxième éclairement dans le laps de temps, dans lequel
l'adaptation de la valeur de consigne est un abaissement de la valeur de consigne d'éclairage si la variation détectée du premier éclairement est une diminution du premier éclairement, et
l'adaptation de la valeur de consigne d'éclairage est une augmentation de la valeur de consigne d'éclairage si la variation détectée du premier éclairement est une élévation du premier éclairement.

2. Procédé selon la revendication 1, dans lequel
la détection du premier éclairement se fait par les premiers moyens capteurs (1) prévus sur la zone de plafond (20) et/ou la détection du deuxième éclairement se fait par les deuxièmes moyens capteurs (2) prévus sur la zone de plafond (20)

3. Procédé selon l'une des revendications 1 ou 2, dans lequel
les deuxièmes moyens capteurs (2) présentent par rapport aux premiers moyens capteurs (1) une orientation de capteur différente dans l'espace intérieur et/ou un angle de détection de capteur agrandi pour la lumière visible.

4. Procédé selon l'une des revendications 1 à 3, dans lequel
la zone d'éclairage (22) est une surface de table espacée d'une zone de sol de l'espace intérieur ou une section d'une telle surface de table.

5. Procédé selon l'une des revendications 1 à 4, dans lequel
l'espace intérieur présente une fenêtre, et la zone de détection d'éclairage élargie (12) détecte une entrée de lumière extérieure par la fenêtre ou inclut au moins par sections une zone de passage de lumière de la fenêtre.

6. Système pour la régulation d'éclairage dans un espace intérieur comportant une zone de plafond (11) ainsi qu'une zone d'éclairage (22) à éclairer opposée à la zone de plafond, comprenant :
des moyens de régulation (6) ;
de premiers et deuxièmes moyens capteurs (1, 2) ; et
des moyens d'éclairage électriques d'espace intérieur (7), dans lequel
les moyens de régulation (6) sont appropriés pour réguler une puissance lumineuse des moyens d'éclairage d'espace intérieur (7) à une valeur de consigne d'éclairage, qui est une valeur de consigne de régulation de la régulation d'éclairage, en réaction à un signal de sortie des premiers moyens capteurs (1) ;
les premiers moyens capteurs (1) sont appropriés pour détecter un premier éclairement dans la zone d'éclairage (22) des moyens d'éclairage d'espace intérieur (7), et les premiers moyens capteurs (1) sont dirigés sur la zone d'éclairage (22) et/ou sont installés de telle sorte qu'ils détectent le premier éclairement dans la zone d'éclairage (22),
les deuxièmes moyens capteurs (2) sont prévus séparément des premiers moyens capteurs (1) et sont appropriés pour détecter un deuxième éclairement dans une zone de détection d'éclairage élargie (12) dans l'espace intérieur au moins par sections en dehors de la zone d'éclairage (22) et au moins par sections en dehors d'une zone de détection (11) des premiers moyens capteurs (1),
**caractérisé en ce que**
les moyens de régulation sont formés pour exécuter les étapes suivantes :
adapter la valeur de consigne d'éclairage de telle sorte qu'aucune modification de la puissance lumineuse n'apparaisse si les moyens de régulation (6) détectent qu'une variation détectée du premier éclairement dans un laps de temps est supérieure de manière disproportionnée à une variation détectée du deuxième éclairement dans le laps de temps, dans lequel
l'adaptation de la valeur de consigne d'éclairage est un abaissement de la valeur de consigne d'éclairage si la variation détectée du premier éclairement est une diminution du premier éclairement, et
l'adaptation de la valeur de consigne d'éclairage est une augmentation de la valeur de consigne d'éclairage si la variation détectée du premier éclairement est une élévation du premier éclairement.

7. Système selon la revendication 6, dans lequel
les moyens d'éclairage d'espace intérieur (7) sont disposés et/ou prévus avec au moins un des premiers et des deuxièmes moyens capteurs (1, 2) ou conjointement avec les premiers et les deuxièmes moyens capteurs (1, 2).

8. Système selon la revendication 7, dans lequel les moyens d'éclairage d'espace intérieur (7) sont disposés et/ou prévus avec au moins un des premiers et des deuxièmes moyens capteurs (1, 2) ou sont prévus conjointement avec les premiers et les deuxièmes moyens capteurs (1, 2) sur ou dans une unité de boîtier et/ou de support commune dans la zone de plafond (20).
